Europäisches Patentamt

European Patent Office

Office européen des brevets

(19)

(11) Numéro de publication: **0 087 667**
**B2**

(12) **NOUVEAU FASCICULE DE BREVET EUROPEEN**

(45) Date de publication du nouveau fascicule du brevet: **13.06.90**

(21) Numéro de dépôt: **83101390.9**

(22) Date de dépôt: **14.02.83**

(51) Int. Cl.⁵: **A 23 B 7/02, A 23 L 1/40, A 23 L 1/212, A 23 L 3/34**

(54) **Procédé de préparation de la garniture d'un produit alimentaire constitué d'une masse poudreuse et d'une garniture emballées séparément.**

(30) Priorité: **03.03.82 FR 8203513**

(43) Date de publication de la demande:
**07.09.83 Bulletin 83/36**

(45) Mention de la délivrance du brevet:
**04.02.87 Bulletin 87/06**

(45) Mention de la decision concernant l'opposition:
**13.06.90 Bulletin 90/24**

(84) Etats contractants désignés:
**AT CH DE GB LI NL**

(56) Documents cités:
**DE-A-1 931 907**    **GB-A-2 031 711**
**FR-A- 991 100**    **US-A-3 563 768**
**FR-A-1 448 161**    **US-A-4 202 912**
**FR-A-1 585 808**    **US-A-4 267 199**
**GB-A-2 016 900**

**Diskussionstagung Forschungskreis der Ernährungsindustrie, Hannover 11.1977,S.5-17 Pilze, F.M. Engel-F.Timber,S.-W.-Verlag München 1969,S.104-107.**

**Le dossier contient des informations techniques présentées postérieurement au dépôt de la demande et ne figurant pas dans le présent fascicule.**

(73) Titulaire: **SOCIETE DES PRODUITS NESTLE S.A.**
**Case postale 353**
**CH-1800 Vevey (CH)**

(72) Inventeur: **Risler, Pierre**
**12, Allée des 4 sous**
**F-95160 Montmorency (FR)**
Inventeur: **Tencé, Jean-François**
**63, Rue Perthuis**
**F-92140 Clamart (FR)**

Courier Press, Leamington Spa, England.

EP 0 087 667 B2

**Description**

La présente invention concerne un procédé de préparation de morceaux de légumes, entrant dans la composition d'un produit alimentaire de longue conservation du genre potage ou sauce instantané comprenant une masse déshydraté sous forme particulaire et une garniture constitué de morceaux de légumes emballés séparément et dont les composants se réhydratent instantanément dans un milieu aqueux.

Ces produits sont classiquement stérilisés ou déshydratés. La stérilisation demande beaucoup de temps et d'énergie, impose un emballage coûteux et conduit à une détérioration organoleptique. La déshydratation, par exemple à l'air chaud ou sur cylindre s'accompagne d'un racornissement de surface des morceaux de la garniture et en particulier les légumes perdent leur caractére instantanément soluble et prennent un goût de foin. La lyophilisation procure l'instantanéité mais elle est très onéreuse et ne permet pas toujours de maintenir les qualités souhaitées (par exemple de décoloration de la carotte intervient rapidement, même à l'abri de l'oxygène).

Selon le brevet des Etats-Unis No. 3,563,768, on a proposé des potages instantanés en sachet double, l'on des compartiments comportant le liant en poudre, la graisse, les arômes et du phosphate trisodique tandis que l'autre contient le produit non poudreux en morceaux (pâtes, légumes, viande). Les morceaux sont cuits par infusion dans un milieu aqueux contenant des acides, agents séquestrants, fongicide de manière à être organoleptiquement et microbiologiquement stables, puis égouttés et les sachets sont remplis à chaud. Le phosphate trisodique sert à neutraliser l'acide à la dissolution. Cette présentation a l'inconvénient de faire appel à des agents étrangers affectant le goût. De plus la garniture entièrement hydratée occupe un volume relativement important.

Selon une autre technique, décrite dans le brevet britannique No. 2,016,900, le liant et la garniture sont mélanges et à l'état semi-humide, le potage se présentant sous une forme concentrée. Dans ce cas, la stabilité microbiologique requiert la présence d'une quantité relativement importante d'humectant, notamment de sucre, ce qui ne permet pas d'obtenir un produit se rapprochant d'un potage salé fraîchement préparé. De plus sa consistance pâteuse rend son emballage difficile et son emploi malaisé au moment de la préparation ménagère.

L'invention vise en particulier un procédé de préparation d'un potage ou d'une sauce instantané de longue conservation sans goût étranger et facile à utiliser qui, une fois reconstitué, se distingue par des qualités organoleptiques supérieures le rendant proche d'un produit fraîchement préparé.

Le procédé selon l'invention est caractérisé par le fait qu'on blanchit ou cuit les morceaux lavés et parés en retenant au moins 85% en poids des matières solubles intracellulaires par traitement à la vapeur ou par application des micro-ondes, qu'on sèche partiellement les morceaux blanchis ou cuits et qu'on les mélange ensuite à sec avec du sel et eventuellement avec du glutamate de sodium de sorte que leur teneur en humidité soit de 40—50%, leur activité de l'eau de 0.75 à 0.80 et leur pH 4.5 à 7 et qu'ils sont stabilisés organoleptiquement et microbiologiquement et qu'on les rend inaccessibles aux moisisoures et levures par adjonction d'un agent antimycotique.

Dans la description, les termes "instantané" et "instantanéisé" se référent à des produits qui sont solubles, dispersibles ou réhydratables dans un milieu aqueux, de tiède à bouillant dans l'intervalle de quelques secondes à environ 3 minutes. L'expression "de longue conservation" désigne des aliments de conserve ou apertisés dont la durée de péremption est de 5 à 15 mois.

Par activité de l'eau (aw) on désigne le quotient de la pression de vapeur d'un produit par la pression de vapeur de l'eau pure dans les mêmes conditions. Le coefficient d'activité de l'eau est indicatif de l'eau liée. A un niveau bas de celui-ci correspond une réduction de l'eau disponible pour la croissance des microorganismes, et le produit est microbiologiquement stabilisé. Cette stabilisation implique l'emploi d'humectants liant des molécules d'eau, des humectants classiquement employés dans les produits dits "semi-humides" etant les polyols, notamment le glycérol et les sucres, en particulier le saccharose.

Le produit préparé selon le procédé de l'invention comporte deux composants emballés dans des copartiments séparés. L'un des composants est la masse déshydratée sous forme particulaire. Celle-ci est un mélange sec (2 à 5% en poids d'humidité) sous forme de poudre, de flocons, de pailettes ou encore d'une combinaison de ces particules selon la nature du potage ou de la sauce reconstituée désirée.

Une base pour potage clair ou consommé comportera par exemple des matières grasses d'origine animale, tel un premier jus de boeuf ou de la graisse de poule, des hydrolysats de protéine, des autolysats de levure, des extraits de légume ou de viande, des malto-dextrines, des épices, des arômes, du sel, du glutamate en poudre. On pourra y ajouter des pailettes de légumes obtenues par séchage sur cylindre et pailletage d'un mélange gélatinisé d'une purée de légumes et d'amidon.

Dans un potage d'aspect pulpeux, la base déshydratée comportera avantageusement des pailettes de légumes, flocons de pommes de terre et en poudre, du lait, des matières grasses telles que le premier jus de boeuf, la graisse de poule ou l'huile de beurre.

Enfin, un potage velouté ou une sauce contiendra généralement un liant instantané obtenu par exemple par gélatinisation d'une soupe de farine, de malt-dextrine et de lait écrémé, séchage sur cylindre et pailletage, de l'huile de beurre, des jaunes d'oeuf, de l'extrait de levure, des épices et du sel. Dans tous les cas, la masse déshydratée correspond à 25—150 g et de préférence à 25—100 g/l de potage ou de sauce reconstitué.

2

EP 0 087 667 B2

La masse déshydratée d'un potage clair ou velouté peut encore contenir des pâtes alimentaires, semoules, céréales instantanéisées.

L'autre composant du produit préparé selon le procédé de l'invention est constitué de morceaux de légumes. Ce peut être des légumes-feuille, par exemple les poireaux, asperges, ou des légumes-racine ou tubercule tels que les carottes, navets, céleris-raves ou bulbe tels que les oignons couramment utilisés dans la confection des potages, veloutés ou sauces. Ils représentent de 10 à 50 g/l dans le potage ou la sauce reconstitué.

Comme indiqué ci-dessus, ils sont stabilisés microbiologiquement sans l'intervention des humectants habituels, c'est-à-dire que l'activité de l'eau est abaissée en augmentant la concentration des constituants solubles naturels de la cellule végétale et en ajoutant au légume ainsi "confit" les humectants entrant dans la formulation des masses poudreuses, c'est-à-dire le chlorure de sodium les extraits de légumes et le glutamate de sodium. Les additifs, chlorure de sodium, glutamate de sodium ou extraits de légumes, correspondront avantageusement à 8—12 g/l dans un potage reconstitué, le glutamate de sodium représentant de 0 à 2 g/l. L'activité de l'eau de 0,75 à 0,80 permet la stabilisation bactériologique de produit, seules les moisissures et les levures pouvant encore se développer. Pour empêcher un tel développement, on ajoutera au produit un agent anti-mycotique de qualité alimentaire tel que l'acide sorbique ou le sorbate de potassium, de préférence à la concentration d'environ 1% en poids.

D'autre part, la garniture est stabilisée organoleptiquement. Cela signifie dans le contexte de l'invention que la texture des légumes est voisine de celle des légumes fraîchement cuits. Cela implique également que la quantité de sel et de glutamate corresponde aux quantités compatibles avec le saveur désirée dans un potage reconstitué, le sel constituant envirion 12% en poids de la garniture tandis que la quantité de glutamate est minimale.

Pour mettre en oeuvre le procédé, on lave et pare les légumes, aussi bien feuille que racine puis on les découpe en dès ou en morceaux de 3 à 10 mm de côté.

Selon une première forme d'exécution qui est préférée, on les blanchit ou cuit ensuite par application des micro-ondes. On procède de préférence en continu dans cuiseur à bande avec un débit horaire de matière coupée et parée de 200—500 kg suivant la puissance micro-ondes appliquée de 25 à 50 kW dans la bande de fréquence préférée de $915 \pm 25$ MHz, l'épaisseur de la couche de légume étant inférieure ou égale à 10 cm et la durée du traitement à la pression atmosphérique étant d'environ 20 min.

En variante, dans la bande de fréquence de $2450 \pm 50$ MHz, les légumes se présenteront sous une couche inférieure ou égale à 3 cm et on obtiendra à titre d'exemple un débit horaire de 60 kg avec une puissance appliquée de 12 kW à la pression atmosphérique, le traitement durant environ 9—10 min.

Selon une autre variante, applicable notamment aux légumes-feuille, on peut effectuer le traitement aux microondes sous pression réduite par exemple de 550 à 650 mm de mercure dans un cuiseur muni de sas à une température d'environ 91—96°C compatible avec la cuisson. Dans la mesure du possible, il est souhaitable de maintenir dans le légume la totalité des solubles qui peuvent ainsi jouer le rôle d'humectants. C'est pourquoi l'utilisation des micro-ondes est particulièrement avantageuse puisqu'elle n'engendre ni perte ni dénaturation des solubles et procure dans les conditions du traitement à pression atmosphérique une évaporation d'environ 15% en poids de l'eau de constitution.

Selon une autre forme d'exécution du procédé, on blanchit ou cuit les légumes à la vapeur, par exemple dans un blancheur continu à bande. Ce traitement s'accompagne d'ordinaire d'une perte de 10 à 15% en poids des solubles tandis que l'évaporation ne correspond qu'a environ 4—5% en poids.

On procède ensuite au séchage partiel des légumes blanchis ou cuits, de préférence dans un sécheur à air chaud continu par entraînement, la température de l'air étant de 60 à 120°C pendant 45 à 120 min. suivant la nature des légumes.

Pour un valeur donnée du coefficient aw et en tenant compte des quantités de sel et du glutamate compatibles avec la saveur désirée dans le produit reconstitué, on détermine le degré de séchage désiré et les paramètres du traitement (débit, température, circulation de l'air) sont avantageusement asservis à une mesure en continu de l'humidité en aval. On tiendra compte du fait que le séchage des légumes doit correspondre au maximum à 75% d'eau enlevée par rapport au poids du légume cuit ou blanchi, de manière à éviter un racornissement des légumes. En sortant du sécheur, les légumes contiennent de préférence de 45 à 55% en poids d'humidité.

On y ajoute ensuite une quantité de sel et éventuellement de glutamate prédéterminée mélange à sec, ce qui permet de régler exactement la quantité d'humectant qui infuse dans le légume. La quantité totale de sel + glutamate à mélanger au légume dépendra naturellement de la teneur en matières sèches du légume mis en oeuvre et de la nature de la cuisson ou du blanchiment. Lorsque celui-ci est à la vapeur, il faut compenser la perte d'une partie des solubles par un complément, en général sous forme de glutamate qu'on ajoute lorsque la quantité maximale de sel désirée est atteinte. Par contre l'adjonction de glutamate n'est pas toujours nécessaire dans le cas de cuisson ou de blanchiment par les micro-ondes et ceci constitue un avantage décisif. Enfin, on ajoutera l'agent anti-mycotique.

Après ces additions, on compacte de préférence les légumes de manière à leur faire occuper un faible volume sans détruire leur texture, à des pressions de 294 à 491 Pa. Ceci a l'avantage de faciliter le dosage et le remplissage des légumes dans leur compartiment. En outre les légumes compactés sont moins accessibles aux moisissures et levures et à l'oxygène.

Comme mentionné ci-dessus, les deux composants seront emballés dans tout emballage convenant à

3

leur nature comportant deux compartiments séparés p. ex. sachets souples, récipients thermoformés ou emboutis avec opercule etc. . ., pourvu que les matériaux qui les constituent soient étanches à l'humidité, à la lumière et à l'oxygène. A titre d'exemple, on pourra utiliser un emballage tel que décrit dans la demande de brevet européen publiée No. 88,255. De plus, les deux composants seront avantageusement emballés sous atmosphére inerte à l'abri de la lumière.

Les exemples ci-après illustrent le procédé de préparation de la garniture de légumes et les produits alimentaires à deux composants, les parties et pourcentages étant pondéraux sauf indication contraire:

Exemple 1—16

On pèle, pare, lave et tamise des carottes ou on pare et lave des poireaux de manière à obtenir des morceaux de 3 à 10 mm de côté.

On traite les légumes lavés et parés dans un cuiseur micro-ondes à bande continue à la pression atmosphérique pendant 20 min. en couche de 9 cm. La puissance appliquée est 50 kW à 915 MHz et le débit des légumes 400 kg/h.

Par comparaison, on effectue un traitement parallèle à la vapeur dans un blancheur continu à bande à la pression atmosphérique pendant 15 min., le débit de vapeur étant 0,48 tonne/h.

Dans tous les cas, on sèche le légume blanchi ou cuit dans un sécheur à air continu pendant 60 min pour la carotte et 75 min. Pour le poireau à la température de l'air par paliers de 120 à 60°C.

On mélange ensuite à sec la quantité de sel et éventuellement de glutamate requise pour atteindre la valeur aw préalablement choisie en ajoutant du sorbate de potassium à raison de 1‰ en poids.

Les tableaux I et II ci-dessous donnent les rendements-composition des légumes finis stabilisés microbiologiquement et de bonne qualité organoleptique.

On voit très nettement que le traitement par micro-ondes nécessite une quantité plus faible de glutamate pour atteindre l'aw désiré que le traitement à la vapeur et dans certains ces permet d'éviter cette adjonction. D'autre part, les rendements sont toujours meilleurs.

Exemples 17—20

Dans ces exemples, on prépare les "légumes sur support" par séchage sur cylindre et pailletage d'une purée de légumes additionnée d'amidon (ex. 17 à 20), le "liant instantané" par séchage sur cylindre et pailletage d'une soupe de farine, malto-dextrine et lait écrémé (ex. 19), tandis que la "masse expansée" est obtenue par extrusion sous pression de la masse rendue thermoplastique, qui est expansée à la sortie de la tête d'extrusion dans une enceinte sous vide (ex. 20).

On prépare la garniture de légumes comme indiquée aux exemples 1, 3, 5, 7, 9, 11, 13 ou 15. On compacte les légumes dans une formeuse à une pression correspondant à 392 kPa au niveau du légume. On emballe ensuite la masse de garniture compactée dans l'un des compartiments d'un emballage multiple thermoformé qu'on ferme par un opercule tandis qu'on dose la masse déshydratée dans un deuxième compartiment qu'on ferme avec un opercule.

On pourrait en variante ne pas mettre en forme la garniture et emballer les produits dans des sachets souples à deux compartiments, dont les ouvertures sont opposées, le remplissage s'effectuant par exemple tête-bêche.

Les produits obtenus ont la composition indiquée ci-dessous.

Potage pulpeux aux carottes, céleris-raves, navets et poireaux (exemple 17)

|  | Composition (%) |
| --- | --- |
| Garniture de carottes, poireaux, céleris-raves, navets comprimés | 37,3 |
| Masse déshydratée |  |
| Légumes sur support (pailettes) | 48,5 |
| Lait écrémé | 6,3. |
| Matières grasses (poudre) | 6,0 |
| Sel | 1,9 |

Pour reconstituer un potage, on verse les légumes de la garniture (50 g) dans 1 litre d'eau à 60°C qu'on porte à ébullition, puis on verse la masse déshydratée (84 g) (paillettes et poudre) et on laisse cuire environ 5 secondes à feu doux.

Potage pulpeux aux poireaux et pommes de terre (exemple 18)

|  | Composition (%) |
|---|---|
| Garniture de poireaux comprimés | 34,8 |
| **Masse déshydratée** | |
| Légumes sur support (paillettes) | 49,0 |
| Lait écrémé | 7,0 |
| Matières grasses } (poudre) | 6,9 |
| Sel | 2,3 |

On reconstitue le potage comme ci-dessus, la garniture représentant 40 g et la masse déshydratée 75 g pour 1 litre d'eau.

Potage velouté aux asperges (exemple 19)

|  | Composition (%) |
|---|---|
| Garniture de pointes d'asperges comprimées | 9,09 |
| **Masse déshydratée** | |
| Liant instantané } (paillettes) | 51,81 |
| Légumes sur support | 23,07 |
| Sel | 6,87 |
| Matières grasses | 5,68 |
| Jaunes d'oeuf } (poudre) | 2,27 |
| Extrait de levure | 1,14 |
| Epices | 0,07 |

On reconstitue le potage comme indiqué à l'exemple 17, la garniture représentant 10 g et la masse déshydratée 100 g pour un litre d'eau.

Consomme de volaille avec légumes (exemple 20)

|  | Composition (%) |
|---|---|
| Garniture de légumes comprimés | 65,79 |
| **Masse déshydratée** | |
| Légumes sur support (paillettes) | 8,06 |
| Malto-dextrine | 7,01 |
| Matières grasses | 5,26 |
| Sel | 4,23 |
| Hydrolysat de protéines végétales } (granulés expansés) | 3,51 |
| Extrait de levure | 3,51 |
| Viande de poule | 1,75 |
| Glutamate | 0,88 |

On reconstitue le potage comme à l'exemple 17, la garniture représentant 50 g et la masse déshydratée 26 g pour un litre d'eau.

Tableau I : carottes

| MS % | Mode de cuisson | Poids après séchage kg | Composition du produit fini | | | | aw | Poids kg | (*) Rendement de fabrication % |
| --- | --- | --- | --- | --- | --- | --- | --- | --- | --- |
| | | | leg % | H₂O % | Nacl % | Glu % | | | |
| 10,0 | M.O. | 90,52 | 38,87 | 49,13 | 12,00 | 0,00 | 0,80 | 102,85 | 17,98 (1) |
| 10,0 | V | 94,46 | 28,65 | 48,79 | 12,00 | 10,56 | 0,80 | 121,98 | 21,32 (2) |
| 14,0 | M.O. | 126,78 | 38,87 | 49.13 | 12,00 | 0,00 | 0,80 | 144,07 | 25,19 (3) |
| 14,0 | V | 107,11 | 40,19 | 47,81 | 12,00 | 0,00 | 0,80 | 121,72 | 21,28 (4) |
| 10,0 | M.O. | 85,00 | 37,84 | 42,60 | 12,00 | 7,56 | 0,75 | 105,67 | 18,47 (5) |
| 10,0 | V | 94,46 | 26,57 | 45,23 | 12,00 | 16,20 | 0,75 | 131,56 | 23,00 (6) |
| 14,0 | M.O. | 108,00 | 45,63 | 42,37 | 12,00 | 0,00 | 0,75 | 122,73 | 21,46 (7) |
| 14,0 | V | 93,93 | 44,58 | 41,02 | 12,00 | 2,40 | 0,75 | 109,73 | 19,18 (8) |

Tableau II : poireaux

| MS % | Mode de cuisson | Poids après séchage kg | Composition du produit fini | | | | aw | Poids kg | (*) Rendement de fabrication % |
| --- | --- | --- | --- | --- | --- | --- | --- | --- | --- |
| | | | leg % | H₂O % | Nacl % | Glu % | | | |
| 10,0 | M.O. | 93,80 | 37,68 | 50,32 | 12,00 | 0,00 | 0,80 | 106,59 | 18,63 (9) |
| 10,0 | V | 89,00 | 32,13 | 49,51 | 12,00 | 6,36 | 0,80 | 109,02 | 19,06 (10) |
| 14,0 | M.O. | 130,77 | 37,68 | 50,32 | 12,00 | 0,00 | 0,80 | 148,60 | 25,98 (11) |
| 14,0 | V | 112,34 | 38,41 | 49,60 | 12,00 | 0,00 | 0,80 | 127,66 | 22,32 (12) |
| 10,0 | M.O. | 85,00 | 38,69 | 43,55 | 12,00 | 5,75 | 0,75 | 103,36 | 18,07 (13) |
| 10,0 | V | 89,00 | 29,39 | 45,29 | 12,00 | 13,32 | 0,75 | 119,18 | 20,83 (14) |
| 14,0 | M.O. | 112,76 | 43,70 | 44,30 | 12,00 | 0,00 | 0,75 | 128,14 | 22,40 (15) |
| 14,0 | V | 93,97 | 45,92 | 42,08 | 12,00 | 0,00 | 0,75 | 106,78 | 18,67 (16) |

Légende MS: pourcentage pondéral de matière sèche du légume de départ; M.O.: micro-ondes; V: vapeur; leg.: légume; GLu: glutamate de sodium

* Pour une matière sèche de départ donnée, soit 10 ou 14%, les rendements de fabrication ne sont comparables que si les produits finis ne contiennent pas de glutamate et que si leur aw est identique. Ex.: (1) et (3); (1) et (4); (3) et (4); (9) et (11); (9) et (12);) (11) et (12); (15) et (16) sont comparables. (5), (6), (7) et (8) ne sont pas comparables.

## Revendications

1. Procédé de préparation de morceaux de légumes, entrant dans la composition d'un produit alimentaire de longue conservation du genre potage ou sauce instantané comprenant une masse déshydraté sous forme particulaire et une garniture constituée de morceaux de légumes emballés séparément et dont les composants se réhydratent instantanément dans un milieu aqueus, caractérisé par le fait qu'on blanchit ou cuit les morceaux lavés et parés en retenant au moins 85% en poids des matières solubles intracellulaires par traitement à la vapeur ou par application des micro-ondes, qu'on sèche partiellement les morceaux blanchis ou cuits et qu'on les mélange ensuite à sec avec du sel et eventuellement avec du glutamate de sodium de sorte que leur teneur en humidité soit de 40—50%, leur activité de l'eau de 0.75 à 0.80 et leur pH 4.5 à 7 et qu'ils sont stabilisés organoleptiquement et microbiologiquement et qu'on les rend inaccessibles aux moisisoures et levures par adjonction d'un agent antimycotique.

2. Procédé selon la revendication 1, caractérisé par le fait qu'on blanchit ou cuit les légumes par l'application des micro-ondes.

3. Procédé selon la revendication 1, caractérisé par le fait qu'on ajoute environ 1‰ en poids d'agent antimycotique.

4. Procédé selon la revendication 1, caractérisé par le fait qu'on compacte les légumes obtenus de manière à leur faire occuper un faible volume dans détruire leur texture et à les mettre sous forme d'unités prédosées.

## Patentansprüche

1. Verfahren zur Herstellung von Gemüsestückchen, welche in die Zusammensetzung eines lange haltbaren Nahrungsmittelproduktes von der Art einer sofortlöslichen Suppe oder Sauce, umfassend eine dehydratisierte Masse in Teilchenform und eine gesondert verpackte, aus Gemüsestückchen bestehende Garnitur, Eingang finden, wobei sich die Bestandteile des Nahrungsmittelproduktes in einem wässerigen Medium sofort rehydratisieren, dadurch gekennzeichnet, dass man die gewaschenen und zugerichteten Stückchen auf solche Weise blanchiert oder kocht, dass wenigstens 85 Gew.-% der intrazellularen löslichen Stoffe erhalten bleiben, und zwar durch Behandlung mit Wasserdampf oder durch Anwendung von Mikrowellen, dass man die blanchierten oder gekochten Stückchen teilweise trocknet und dass man sie mit dem Salz und gegebenenfalls mit dem Natriumglutamat auf solche Weise vermischt, dass der Feuchtigkeitsgehalt der Stückchen 40 bis 50 Gew.-% beträgt, dass ihre Wasseraktivität 0,75 bis 0,80 und ihr pH-Wert 4,5 bis 7 sind und dass man die Stückchen durch Zugabe eines antimykotischen Mittels für Schimmel- und Hefepilze unzugänglich macht.

2. Verfahren nach Anspruch 1, dadurch gekennzeichnet, dass man die Gemüse durch Anwendung von Mikrowellen blanchiert oder kocht.

3. Verfahren nach Anspruch 1, dadurch gekennzeichnet, dass man ungefähr 0,1 Gew.-% eines antimykotischen Mittels zusetzt.

4. Verfahren nach Anspruch 1, dadurch gekennzeichnet, dass man die erhaltenen Gemüse auf solche Weise verdichtet, dass sie ein geringes Volumen einnehmen, ohne ihre Textur zu zerstören, und dass sie in die Form vordosierter Einheiten gebracht werden.

## Claims

1. A process for the preparation of pieces of vegetables entering into the composition of a food product having a long storage life such as an instant soup or sauce comprising a dehydrated mass in a particular form and a garnishing consisting of pieces of vegetables, the mass and the garnishing being packaged separately, the components of the food product being capable of instantaneous rehydration in an aqueous medium, characterised in that one blanches or cooks the washed and prepared pieces while retaining at least 85% by weight of the intracellular soluble substances by treatment with steam or the application of microwaves, that one partially dries the blanched or cooked pieces and mixes them with salt and possibly sodium glutamate so that their moisture content is from 40 to 50%, by weight, their water activity is from 0.75 to 0.80 and their pH is from 4.5 to 7 and which are stabilized organoleptically and microbiologically and that they are rendered inaccessible to mould and yeast by the addition of an anti-mycotic agent.

2. A process according to claim 1, characterised in that one blanches or cooks the vegetables by the application of microwaves.

3. A process according to claim 1, characterised in that one adds about 1% by weight of anti-mycotic agent.

4. A process according to claim 1, characterised in that one compacts the vegetables which are obtained so that they occupy a small volume, without impairment to their texture, and so that they are brought into the form of predetermined units.